# EUROPEAN PATENT SPECIFICATION

(11) **EP 4 245 609 B1**
(45) Date of publication and mention of the grant of the patent: **27.05.2026**
(21) Application number: 20965437.5
(22) Date of filing: 16.12.2020
(51) Int. Cl.: B60R 1/04, B60W 40/09

(54) **REAR-VIEW MIRROR CONTROL METHOD AND RELATED DEVICE**
RÜCKSPIEGELSTEUERUNGSVERFAHREN UND ZUGEHÖRIGE VORRICHTUNG
PROCÉDÉ DE COMMANDE DE RÉTROVISEUR ET DISPOSITIF ASSOCIÉ

(43) Date of publication of application: 20.09.2023
(73) Proprietor: Shenzhen Yinwang Intelligent Technologies Co., Ltd., Shenzhen, Guangdong 518129 (CN)
(72) Inventor: ZHENG, Minghui, Shenzhen, Guangdong 518129 (CN); WANG, Yi, Shenzhen, Guangdong 518129 (CN)
(74) Representative: Körber, Martin Hans
(86) International application number: PCT/CN2020/136770
(87) International publication number: WO 2022/126419

(56) References cited:
- CN-A- 104 461 005
- CN-A- 108 045 308
- CN-A- 108 583 439
- CN-A- 109 409 259
- CN-A- 110 738 142
- CN-A- 111 709 264
- CN-A- 111 873 911
- JP-A- 2013 132 970

## Description

### TECHNICAL FIELD

Embodiments of this application relate to the field of artificial intelligence, and specifically, to a method for controlling a rear view mirror and a related device. In the method, it is determined, in a timely manner based on facial characteristic information, that a driver has an intention of viewing a central rear view mirror, and the central rear view mirror is adjusted based on relative positions of the central rear view mirror and a target object.

### BACKGROUND

Rear view mirrors of a vehicle include an interior rear view mirror and exterior rear view mirrors. The exterior rear view mirrors include rear view mirrors on left and right sides of a front part of the vehicle. The interior rear view mirror is in the center of a front row of the vehicle, and is also referred to as a central rear view mirror. When the vehicle is traveling, a driver can effectively determine a distance between the vehicle and a vehicle behind the vehicle based on an image in the central rear view mirror of the vehicle. An angle between the central rear view mirror and human eyes needs to be adjusted to achieve an optimal view and an optimal angle of view. When the vehicle is traveling, if the driver is to adjust the central rear view mirror, a hand of the driver needs to leave a steering wheel while the driver stares at the rear view mirror. This causes the driver to be distracted and not to focus on a road, leading to traffic accident hazards. Currently, the central rear view mirror can be automatically adjusted to improve driving safety.

In the conventional technology, a method for automatically adjusting the central rear view mirror is generally triggered by using a voice interaction instruction, that is, when the driver sends a voice instruction to the central rear view mirror, the central rear view mirror starts adjustment. However, when a passenger talks in the vehicle, accuracy of input of a driver voice instruction is affected, and a voice recognition process in triggering of the voice instruction is relatively long, which cannot meet a requirement of the driver for adjusting an angle of the central rear view mirror in a timely manner. CN 108 583 439 A discloses a method that utilizes the spatial relationships within the vehicle's three-dimensional coordinate system for mirror adjustment, and relies solely on acquiring the coordinates of the driver's binocular center point. This approach optimizes the mirror based on the driver's physical location within the vehicle, overlooking the potential for interactive behavior with the mirror.

### SUMMARY

Embodiments of this application provide a method for controlling a rear view mirror and a related device, which are configured to adjust a central rear view mirror to an optimal angle of view for a driver in a timely manner after it is determined that the driver has an intention of viewing the central rear view mirror based on facial characteristic information of the driver.

A first aspect of embodiments of this application provides a method for controlling a rear view mirror.

A rear view mirror system is pre-installed inside a driver's cab. After the rear view mirror system is turned on, facial characteristic information of a target object in a driver's seat is continuously obtained.

A program in the rear view mirror system presets a trigger condition. If the facial characteristic information obtained by the rear view mirror system from the driver's seat meets an instruction trigger condition, the rear view mirror system generates a control instruction for the central rear view mirror.

The rear view mirror system responds to the control instruction generated after the trigger condition is met, and the control instruction is used to adjust the central rear view mirror based on relative positions of the central rear view mirror and the target object.

It may be understood that the rear view mirror system determines in a timely manner that a driver has an intention of viewing the central rear view mirror based on the facial characteristic information, and adjusts the central rear view mirror based on the relative positions of the central rear view mirror and the target object, thereby resolving a problem that accuracy and timeliness are insufficient when a voice instruction is triggered, so that users have more efficient experience.

The rear view mirror system continuously obtains a facial posture of a target object in a driver's seat. When the target object faces toward a central rear view mirror, the rear view mirror system obtains an effective facial posture indicating that the face of the target object faces toward the central rear view mirror.

When duration for which the effective facial posture indicating that the face of the target object faces toward the central rear view mirror is kept is greater than or equal to a preset duration threshold, the rear view mirror system determines that facial characteristic information of the target object meets an instruction trigger condition used to trigger adjustment of the central rear view mirror.

It may be understood that the rear view mirror system determines whether the target object has an intention of viewing the central rear view mirror based on a duration of the facial posture of the target object facing towards the rear view mirror, so that whether the target object has the intention of viewing the central rear view mirror can be determined more directly and more accurately.

Based on the first aspect and the first implementation of the first aspect, embodiments of this application provide a second implementation of the first aspect.

The rear view mirror system first obtains the facial image sequence of the target object. The facial image sequence is an image sequence in which single-frame static images obtained by the rear view mirror system are arranged in a chronological order.

When the rear view mirror system detects that a facial posture of each facial image in the facial image sequence faces toward the central rear view mirror, the effective facial posture of the target object indicating that the face of the target object faces toward the central rear view mirror is obtained.

According to the invention, when the rear view mirror system detects that a left-right rotation angle and a pitch angle of a facial posture of the target object relative to a face facing straight ahead in the facial image are smaller than a preset angle threshold, the rear view mirror system determines that the facial posture in the facial image faces toward the central rear view mirror.

Based on any one of the first aspect of the invention, embodiments of this application provide implementation examples of the first aspect.

The rear view mirror system obtains a driver seat image sequence indicating that the target object is in the driver seat. The driver seat image sequence is a single-frame static image sequence that is arranged in a chronological order and indicates that the target object is in the driver seat.

The rear view mirror system removes a background of each driver seat image indicating that the target object is in the driver seat in the driver seat image sequence by using an automatic matting algorithm, and obtains only the facial image. The facial image obtained after the driver seat image is processed corresponds to the driver seat image to generate the facial image sequence.

It may be understood that the rear view mirror system obtains the facial image after the driver seat image indicating that the target object is in the driver seat is processed by using the automatic matting algorithm, and determines whether the target object has an intention of viewing the central rear view mirror based on the facial image, thereby avoiding interference caused by another object in the driver seat image to facial recognition and improving accuracy of the facial recognition.

Based the invention, a further example of implementation is provided.

The rear view mirror system can directly obtain the facial image sequence of the target object from the driver seat image sequence, or use a contour estimation engine to remove a background from the driver seat image sequence, to obtain a contour of a seat and generate a seat image sequence.

The rear view mirror system uses the automatic matting algorithm to remove the background and obtain the facial image sequence from the seat image sequence.

It may be understood that the rear view mirror system first obtains the seat image from the driver seat image, and then obtains the facial image from the seat image. This can avoid interference caused by the face of another target in another seat to facial image recognition of the target object due to angle deviation of an image capture apparatus of the rear view mirror system, thereby improving accuracy of obtaining the facial image.

Based on the invention, a further example of implementation is provided.

A camera in the rear view mirror system may be installed in a plurality of manners. If an installation position enables the camera to obtain a large image range, the rear view mirror system obtains an image of a front row of a driver's cab.

The rear view mirror system uses the automatic matting algorithm and contour estimation to obtain a left seat image, a right seat image, and a steering wheel image from the front row image of the driver's cab.

The rear view mirror system determines that a seat on the same side as the steering wheel is a driver seat. If the left seat and the steering wheel are on the same side, the left seat is the driver seat.

After the rear view mirror determines the driver seat, the rear view mirror system obtains the driver seat image sequence of the target object.

It may be understood that the rear view mirror system obtains the front row image of the driver's cab, determines the driver seat based on the left seat image, the right seat image, and the steering wheel image in the front row image of the driver's cab, and obtains the driver seat image sequence. This can be applied to a left-hand drive vehicle and a right-hand drive vehicle, thereby expanding an application scope and implementing a new function.

Based on the invention, a further example of implementation is provided.

When the rear view mirror system determines that the target object has an intention of viewing the rear view mirror, the rear view mirror system triggers angle adjustment of the central rear view mirror, and first determines a geometric point of a human eye position based on an effective facial posture of a face facing toward the central rear view mirror.

The rear view mirror system determines a target connection line between a human eye position point and any target position point on the central rear view mirror.

The rear view mirror system calculates a first projection of the target connection line on a normal plane perpendicular to a mirror surface of the central rear view mirror.

The rear view mirror system obtains a second projection of the target connection line on the mirror surface of the central rear view mirror.

The rear view mirror system calculates a first included angle between the first projection and a central vertical line of the mirror surface of the central rear view mirror.

The rear view mirror system determines a second included angle between the second projection and a normal line of the mirror surface of the central rear view mirror.

The rear view mirror system adjusts the first included angle to a first preset value, and adjusts the second included angle to a second preset value.

Based on the invention, a further example of implementation is provided.

The facial characteristic information may be a facial posture of the target object, or may be eyeball status information of the target object. The rear view mirror system includes an infrared transmitter. Reflectivity of each part of a human eye to infrared light is different. Reflectivity of a pupil and an iris to the infrared light is greatly different. A clear pupil infrared image can be obtained under the infrared light, and the pupil generates a bright reflected light spot.

The rear view mirror system obtains an infrared image of a pupil of the target object and a reflection light spot of the pupil of the target object.

The rear view mirror system calculates relative positions between the infrared image of the pupil and the reflection spot of the pupil.

If the relative positions between the infrared image of the pupil and the light reflecting spot of the pupil meets the preset trigger condition of the central rear view mirror, a control instruction for the central rear view mirror is triggered.

It may be understood that determining whether the target object has an intention of viewing the central rear view mirror by using the eyeball status information of the target object are more rapid and accurate.

A second aspect of embodiments of this application provides a rear view mirror system. The system has a function of implementing the rear view mirror system in the first aspect. The functions may be implemented by using hardware or by executing corresponding software by hardware. The hardware or software includes one or more modules corresponding to the functions.

A third aspect of embodiments of this application provides a rear view mirror system, including a processor, a memory, an input/output device, and a bus.

The processor, the memory, and the input/output device are connected to the bus.

The processor is configured to perform the method according to any implementation of the first aspect.

A fourth aspect of embodiments of this application provides a computer storage medium. The computer readable storage medium stores a program, and when a computer executes the program, the method according to any implementation of the first aspect.

A fifth aspect of embodiments of this application provides a computer program product, and when the computer program product runs on a computer, the computer is enabled to perform the method according to any implementation of the first aspect.

A sixth aspect of embodiments of this application provides a vehicle, and the vehicle includes a rear view mirror system provided in any implementation of the second aspect or in the third aspect.

It may be learned from the foregoing technical solutions that there are the following advantages in embodiments of this application: the facial characteristic information of the target object is obtained, where when the facial characteristic information meets an instruction trigger condition, the control instruction for the central rear view mirror is generated, and in response to the control instruction, the central rear view mirror is adjusted based on the relative positions of the central rear view mirror and the target object. It is determined in a timely manner that the driver has an intention of viewing the central rear view mirror based on the facial characteristic information, and the central rear view mirror is adjusted based on the relative positions of the central rear view mirror and the target object. This resolves a problem that accuracy and timeliness are insufficient when a voice instruction is triggered, so that users have more efficient experience.

### BRIEF DESCRIPTION OF DRAWINGS

FIG. 1 is a diagram depicting a hardware structure of a rear view mirror system;
FIG. 2 is a diagram depicting module interaction of a rear view mirror system;
FIG. 3 (A) and FIG. 3 (B) are a schematic diagram of an embodiment of a method for controlling a rear view mirror according to an embodiment of this application;
FIG. 4 is a schematic diagram of another embodiment of a method for controlling a rear view mirror according to an embodiment of this application;
FIG. 5 is a schematic diagram of another embodiment of a method for controlling a rear view mirror according to an embodiment of this application;
FIG. 6 (A) is a schematic diagram of another embodiment of a method for controlling a rear view mirror according to an embodiment of this application;
FIG. 6 (B) is a schematic diagram of another embodiment of a method for controlling a rear view mirror according to an embodiment of this application;
FIG. 6 (C) is a schematic diagram of another embodiment of a method for controlling a rear view mirror according to an embodiment of this application;
FIG. 6 (D) is a schematic diagram of another embodiment of a method for controlling a rear view mirror according to an embodiment of this application;
FIG. 7 (A) is a schematic diagram of another embodiment of a method for controlling a rear view mirror according to an embodiment of this application;
FIG. 7 (B) is a schematic diagram of another embodiment of a method for controlling a rear view mirror according to an embodiment of this application;
FIG. 7 (C) is a schematic diagram of another embodiment of a method for controlling a rear view mirror according to an embodiment of this application;
FIG. 8 is a diagram depicting a structure of a rear view mirror system according to an embodiment of this application;
FIG. 9 is another diagram depicting a structure of a rear view mirror system according to an embodiment of this application; and
FIG. 10 is another diagram depicting a structure of a rear view mirror system according to an embodiment of this application.

### DESCRIPTION OF EMBODIMENTS

Embodiments of this application provide a method for controlling a rear view mirror. In this method, it is determined in a timely manner, based on facial characteristic information, that a driver has an intention of viewing a central rear view mirror, and the central rear view mirror is adjusted based on relative positions of the central rear view mirror and a target object.

Vehicle rear view mirrors are on left and right sides of a front part of a vehicle and in the front of the vehicle. The vehicle rear view mirrors show conditions behind, on sides of, and below the vehicle, so that the driver can see conditions at these positions clearly through the vehicle rear view mirrors, and a field of view of the driver is expanded. An interior rear view mirror in the center is used to observe road conditions behind the vehicle, a passenger in a back seat, or a distance from a vehicle behind the vehicle.

With the development of science and technology, an electronic rear view mirror in a vehicle become a trend. When the vehicle is traveling, a head position of a driver changes, and an orientation of the rear view mirror does not match an angle of view of the driver. The driver needs to adjust an angle of the rear view mirror in the vehicle, and one hand of the driver needs to leave the steering wheel while the driver stares at the rear view mirror. This causes the driver to be distracted and not to focus on a road, leading to traffic accident hazards. Reflection of objects in the surrounding environment is imaged in an electronic screen of the electronic rear view mirror in the vehicle, affecting the driver to obtain a screen content. It is a trend that the electronic rear view mirror in the vehicle automatically adjusts the orientation based on the driver's seating posture and head position.

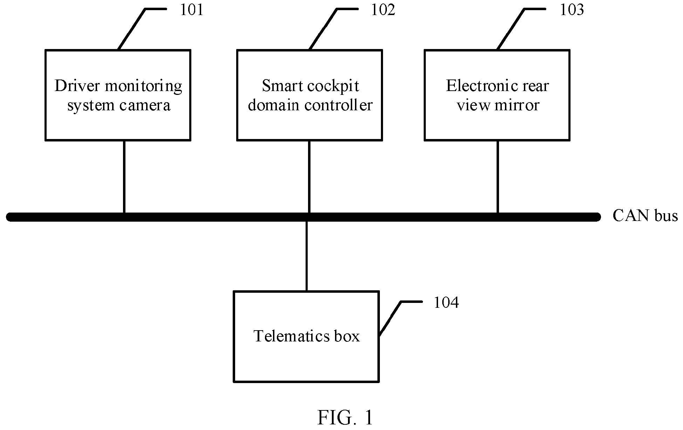

Embodiments of this application may be applied to a vehicle rear view mirror system device architecture shown in FIG. 1. The system device architecture includes a driver monitoring system (driver monitoring system, DMS) camera 101, a smart cockpit domain controller (cockpit domain controller, CDC) 102, an electronic rear view mirror 103, and a telematics box (telematics box, T-BOX) 104.

The following describes functions of devices in the vehicle rear view mirror system device architecture.

The driver monitoring system camera 101 monitors a driving status of a driver in real time by using an infrared camera installed in front of the driver, captures a facial image of the driver, and calculates a face orientation, so that an electric drive unit adjusts the rear view mirror to a position that is easy to be viewed by the driver based on a face orientation calculation result.

The smart cockpit domain controller 102 is equivalent to a central processing unit of a cockpit. All components in the cockpit, such as a central control, seats, and window lifting, are implemented by the smart cockpit domain controller. The rear view mirror in this application is also controlled by the smart cockpit domain controller.

The electronic rear view mirror 103 includes an electronic interior rear view mirror and electronic exterior rear view mirrors. The electronic rear view mirror is used to display images captured by the exterior rear view (surrounding view) camera.

It should be noted that the electronic rear view mirror in the vehicle generally means an electronic screen used to display a rear view mirror, and unnecessarily means a conventional rear view mirror in a vehicle.

The telematics box 104 is configured to connect the vehicle to the Internet. The facial recognition, the orientation recognition, and the like mentioned in the present invention may be performed locally, or may be performed in the cloud. If the cloud is used, a telematics box is required to implement network access.

The driver monitoring system camera 101, the smart cockpit domain controller 102, the electronic rear view mirror 103, and the telematics box 104 are connected by using a controller area network (controller area network, CAN) bus.

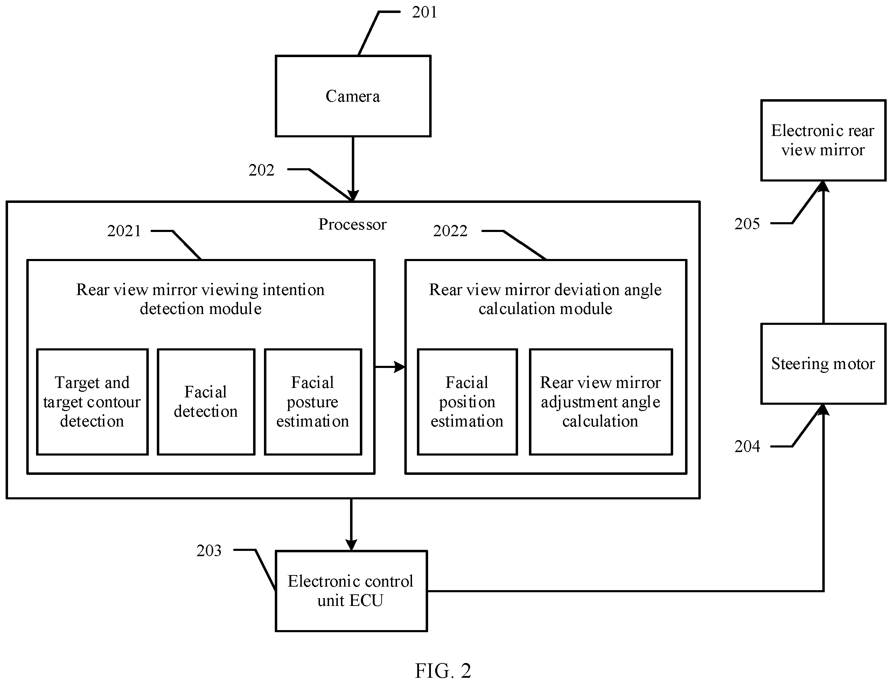

Embodiments of this application may be applied to a vehicle rear view mirror system functional architecture shown in FIG. 2. The functional architecture includes a camera 201, an electronic control unit (electronic control unit, ECU) 203, an electronic rear view mirror 205, a steering motor 204, and a processor 202. The processor 202 includes a rear view mirror viewing intention detection module 2021 and a rear view mirror deviation angle calculation module 2022.

The following describes functions of each part in the vehicle rear view mirror system functional architecture.

The camera 201 is configured to capture a facial image and transmit the facial image to a processor or a computing unit for performing rear view mirror viewing intention detection.

The electronic control unit 203 is configured to perform electronic control on a vehicle.

The electronic rear view mirror 205 includes an electronic interior rear view mirror and electronic exterior rear view mirrors.

The steering motor 204 is configured to adjust an angle of the electronic rear view mirror after a control instruction is received.

The rear view mirror deviation angle calculation module 2022 is configured to estimate a human eye position and calculate an adjustment angle of the rear view mirror after it is determined that a driver has an intention of viewing the rear view mirror.

The rear view mirror viewing intention detection module 2021 is configured to perform target and target contour detection, facial detection, and facial posture estimation on the facial image captured by the camera 201.

With reference to the foregoing description, the following describes an embodiment of a method for controlling a rear view mirror in embodiments of this application.

A facial image of a target object may be directly obtained by pre-installing a camera at a fixed position on a vehicle body, or a facial image of a target object may be obtained by using an algorithm after a camera fastened to a rear view mirror captures an image in a relatively large range, which are separately described as follows.
1. The facial image of the target object is directly obtained.

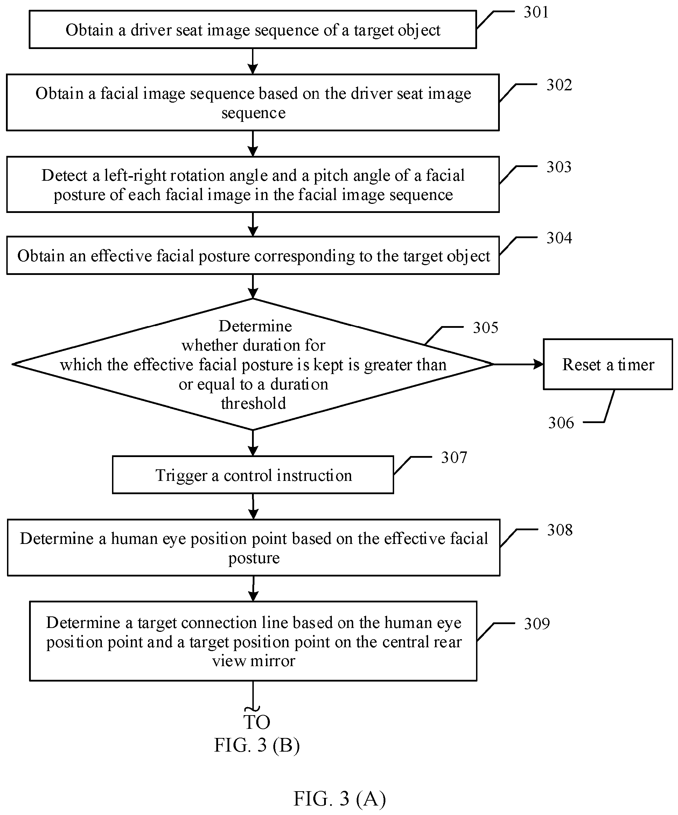

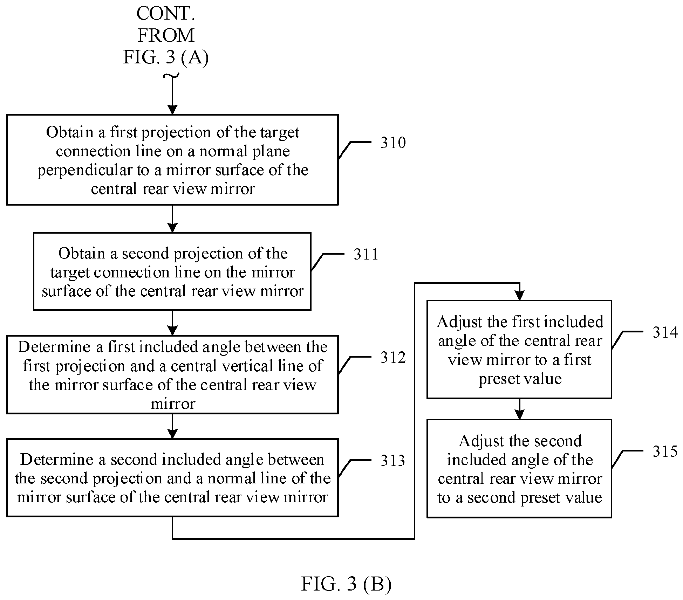

In this embodiment, a camera in a rear view mirror system is fastened to a vehicle body, and faces straight toward a face at a driver seat to directly capture the facial image of the target object. Refer to FIG. 3 (A) and FIG. 3 (B).

301: Obtain a driver seat image sequence of the target object.

The rear view mirror system captures the driver seat image sequence within a period of time, and each driver seat image in the driver seat image sequence is a single-frame static image.

302: Obtain a facial image sequence based on the driver seat image sequence.

The rear view mirror system detects the obtained driver seat image sequence, removes a background by using an automatic matting algorithm, and obtains the facial image sequence. Each facial image in the facial image sequence corresponds to each driver seat image in the driver seat image sequence, and each facial image is a single-frame static image.

303: Detect a left-right rotation angle and a pitch angle of a facial posture of the facial image.

After obtaining the facial image sequence, the rear view mirror system starts a facial posture estimation algorithm engine to obtain a facial posture of each single frame of static facial image in the facial image, and obtain the left-right rotation angle and the pitch angle of the facial posture of the facial image relative to a facial posture of a face facing straight ahead.

In this embodiment, the facial posture obtained when the face faces straight ahead indicates that the driver is looking at the rear view mirror. If the rear view mirror system detects that the left-right rotation angle and the pitch angle of the facial posture of the facial image are smaller than a preset angle threshold, step 304 is performed.

It may be understood that when the camera is located at different positions, facial postures obtained when the face faces straight ahead indicates different meanings. When the camera is located on a steering wheel of a vehicle, a facial posture obtained when the face faces straight ahead indicates that the driver is driving carefully. When the camera is located on a rear view mirror, a facial posture obtained when the face faces straight ahead may alternatively indicate that the driver is looking at the rear view mirror. Specific meanings of the facial postures obtained when the face faces straight ahead are not limited.

It should be noted that when the meanings of the facial postures obtained when the face faces straight ahead are different, a standard based on which the left-right rotation angle and the pitch angle are determined is adjusted accordingly, and a specific adjustment method is not limited.

304: If a left-right rotation angle and a pitch angle of a facial posture of each facial image are smaller than the angle threshold, obtain an effective facial posture corresponding to the target object.

When the rear view mirror system detects that the left-right rotation angle and the pitch angle of the facial posture of the facial image are smaller than the preset angle threshold, it indicates that the driver's face almost faces straight toward the rear view mirror, and the driver may have an intention of viewing the rear view mirror. Therefore, the rear view mirror system marks the facial posture obtained when the left-right rotation angle and the pitch angle are smaller than the angle threshold as the effective facial posture.

305: Determine whether duration for which the effective facial posture is kept is greater than or equal to a duration threshold.

When the rear view mirror system obtains the effective facial posture, a timer starts timing. If it is detected that a facial posture of a single-frame facial image is effective after the timer starts timing, the timer continues the timing. If it is detected that the facial posture is ineffective, the timer is reset, indicating that duration for which the facial posture of the target object faces toward the rear view mirror is insufficient, and the intention of the target object to view the rear view mirror is not true. When a counted time of the timer is greater than a preset value, it indicates that the effective facial posture of the target object remains for a period of time, and an intention of the target object to view the rear view mirror is true, step 307 is triggered.

306: If the duration for which the effective facial posture is kept is smaller than the duration threshold, reset the timer. After obtaining the effective facial posture indicating that the driver has a possibility of viewing the rear view mirror, the rear view mirror system further determines whether the driver has an intention of viewing the rear view mirror by determining the duration for which the effective facial posture is kept. If the duration for which the effective facial posture is kept is smaller than the duration threshold, the timer is reset, indicating that the rear view mirror determines that the driver is not intended to view the rear view mirror when the driver's face faces toward the rear view mirror.

307: If the duration for which the effective facial posture is kept is greater than or equal to the duration threshold, trigger a control instruction.

After determining that the duration for which the effective facial posture is kept is greater than the duration threshold, the rear view mirror system triggers the control instruction to prepare for adjusting the rear view mirror angle.

308: Determine a human eye position point based on the effective facial posture.

The rear view mirror system determines the human eye position point on the effective facial posture based on the obtained effective facial posture.

It should be noted that the human eye position point may be a geometric point generated at a center of a human eyeball, or may be one or several points generated at any position of the human eye, for example, a geometric point generated at an edge of the human eye. This is not specifically limited herein.

309: Determine a target connection line based on the human eye position point and a target position point on the central rear view mirror.

The rear view mirror system determines a connection line between the determined human eye position point and the target position point on the central rear view mirror.

It should be noted that the target connection line may be a direct connection line between one human eye position point and the target location point, or may be a connection line between two human eye position points and the target position point, for example, a connection line between a midpoint of a connection line between two human eye position points and the target position point. This is not specifically limited herein.

It should be noted that the target position point on the central rear view mirror may be a geometric point on a central vertical line of a mirror surface of the central rear view mirror, or may be a geometric point at any position in the central rear view mirror. For example, the target position point is a center on the mirror surface of the central rear view mirror. This is not specifically limited herein.

310: Obtain a first projection of the target connection line on a normal plane perpendicular to the mirror surface of the central rear view mirror.

After determining the target connection line, the rear view mirror system obtains the first projection of the target connection line on the normal plane perpendicular to the mirror surface of the central rear view mirror.

311: Obtain a second projection of the target connection line on the mirror surface of the central rear view mirror.

After determining the target connection line, the rear view mirror system obtains the second projection of the target connection line on the mirror surface of the central rear view mirror.

312: Determine a first included angle between the first projection and the central vertical line of the mirror surface of the central rear view mirror.

The rear view mirror system determines the first included angle between the first projection and the central vertical line of the mirror surface of the central rear view mirror.

313: Determine a second included angle between the second projection and a normal line of the mirror surface of the central rear view mirror.

The rear view mirror system determines the second included angle between the second projection and the normal line of the mirror surface of the central rear view mirror.

314: Adjust the first included angle of the central rear view mirror to a first preset value.

The first preset value is determined based on actual confirmation of the human eye position point, the target position point, and the target connection line in actual use, and the first included angle of the central rear view mirror is adjusted to the first preset value.

315: Adjust the second included angle of the central rear view mirror to a second preset value.

The second preset value is determined based on actual confirmation of the human eye position point, the target position point, and the target connection line in actual use, and the second included angle of the central rear view mirror is adjusted to the second preset value.

In embodiments of this application, the rear view mirror system directly obtains the facial image of the target object by using the camera at a fixed position, and generates, based on the facial image, the control instruction for the central rear view mirror when the facial posture obtained based on the facial image meets an instruction trigger condition, and adjusts the central rear view mirror based on the relative positions of the central rear view mirror and the target object in response to the control instruction. Determining in a timely manner that the driver has an intention of viewing the central rear view mirror based on the facial characteristic information, and adjusting the central rear view mirror based on the relative positions of the central rear view mirror and the target object resolve a problem that accuracy and timeliness are insufficient when a voice instruction is triggered.

2. The facial image of the target object is obtained by performing algorithm processing on the captured image.

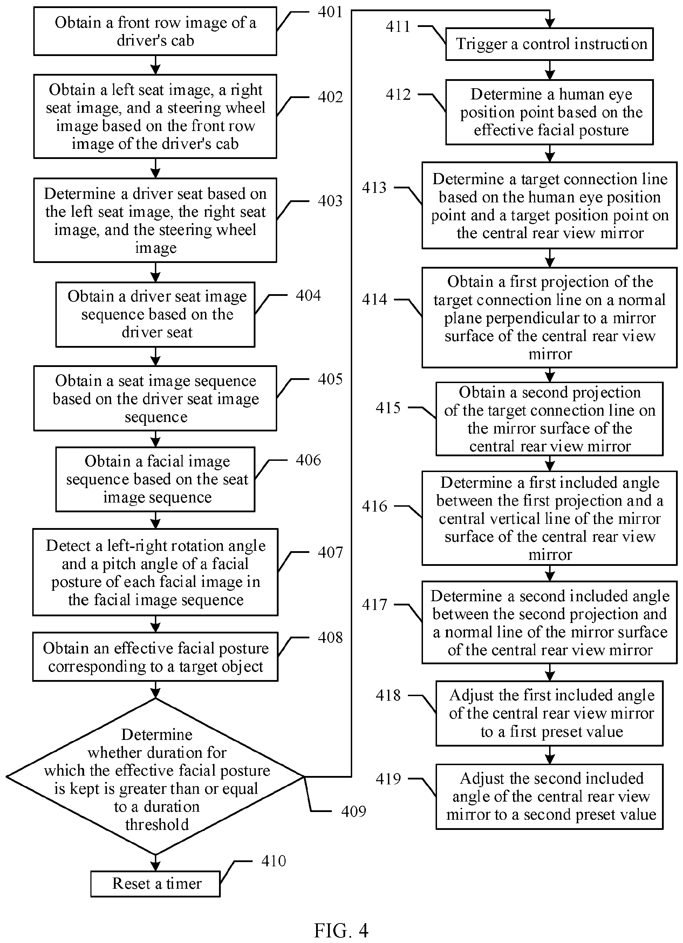

Refer to FIG. 4. The camera is located on the central rear view mirror, and the facial image of the target object is obtained by using an image processing algorithm.

401: Obtain a front row image of a driver's cab.

The rear view mirror system obtains the front row image of the driver's cab. The front row image of the driver's cab is an image captured by the camera facing toward a front row seat of the driver's cab.

402: Obtain a left seat image, a right seat image, and a steering wheel image based on the front row image of the driver's cab.

The rear view mirror system performs background removal and contour estimation on the obtained front row image of the driver's cab to obtain the left seat image, right seat image, and the steering wheel image.

403: Determine a driver seat based on the left seat image, the right seat image, and the steering wheel image.

The rear view mirror system determines whether the left seat image or the right seat image is on a same side as the steering wheel image. If the left seat image and the steering wheel image are on the same side, the left seat is determined as the driver seat of the vehicle. If the right seat image and the steering wheel image are on the same side, the right seat is determined as the driver seat of the vehicle.

404: Obtain a driver seat image sequence based on the driver seat.

After the driver seat is determined, the rear view mirror system obtains the driver seat image sequence corresponding to the driver seat.

405: Obtain a seat image sequence based on the driver seat image sequence.

A driver seat image is a rectangular image whose subject is the driver seat. After the contour estimation is performed on the driver seat image sequence, the rear view mirror system obtains the seat image sequence, and the seat image is a seat-shaped image.

406: Obtain a facial image sequence based on the seat image sequence.

The rear view mirror system detects a face in the seat image, and obtains the facial image sequence if a face is detected.

407: Detect a left-right rotation angle and a pitch angle of a facial posture of each facial image in the facial image sequence.

408: Obtain an effective facial posture corresponding to the target object.

409: Determine whether duration for which the effective facial posture is kept is greater than or equal to a duration threshold.

410: If the duration for which the effective facial posture is kept is smaller than the duration threshold, reset a timer.

411: If the duration for which the effective facial posture is kept is greater than or equal to the duration threshold, trigger a control instruction.

412: Determine a human eye position point based on the effective facial posture.

413: Determine a target connection line based on the human eye position point and a target position point on the central rear view mirror.

414: Obtain a first projection of the target connection line on a normal plane perpendicular to a mirror surface of the central rear view mirror.

415: Obtain a second projection of the target connection line on the mirror surface of the central rear view mirror.

416: Determine a first included angle between the first projection and a central vertical line of the mirror surface of the central rear view mirror.

417: Determine a second included angle between the second projection and a normal line of the mirror surface of the central rear view mirror.

418: Adjust the first included angle of the central rear view mirror to a first preset value.

419: Adjust the second included angle of the central rear view mirror to a second preset value.

In this embodiment, steps 407 to 419 are similar to steps 303 to 315 in the embodiment corresponding to FIG. 3 (A) and FIG. 3 (B) and are not repeated herein.

Based on the method for controlling a rear view mirror in the embodiment shown in FIG. 3 (A) and FIG. 3 (B), the following is an application scenario of the method for controlling a rear view mirror in embodiments of this application.

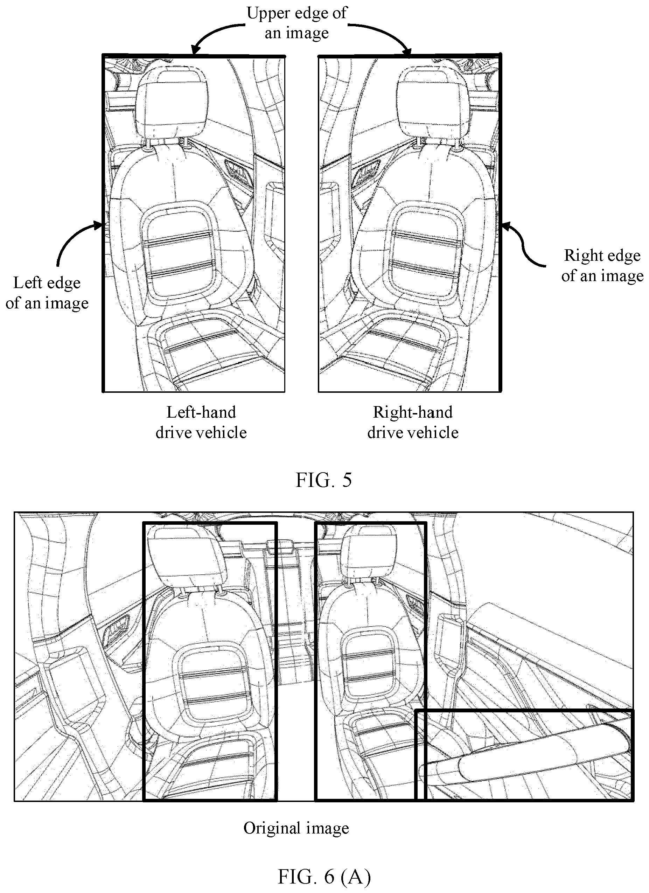

Refer to FIG. 5. In this method, a driver seat image capture apparatus uses a customized narrow-angle lens. An upper edge and left and right edges of an image captured by the customized narrow-angle lens are closely attached to an edge of a seat, and the image usually includes only a seat image. The apparatus is fastened to a vehicle body. A fixed position needs to meet the following requirements:
(1) the position is through a central vertical line of a mirror surface of a rear view mirror;
(2) the lens faces toward a driver's head area; and
(3) the upper edge of the captured image is close to a top contour of a driver seat, and the left edge (a left-hand drive vehicle) or the right edge (a right-hand drive vehicle) of the image is close to the driver seat.

Based on the method for controlling a rear view mirror in the embodiment shown in FIG. 4, the following is another application scenario of the method for controlling a rear view mirror in embodiments of this application.

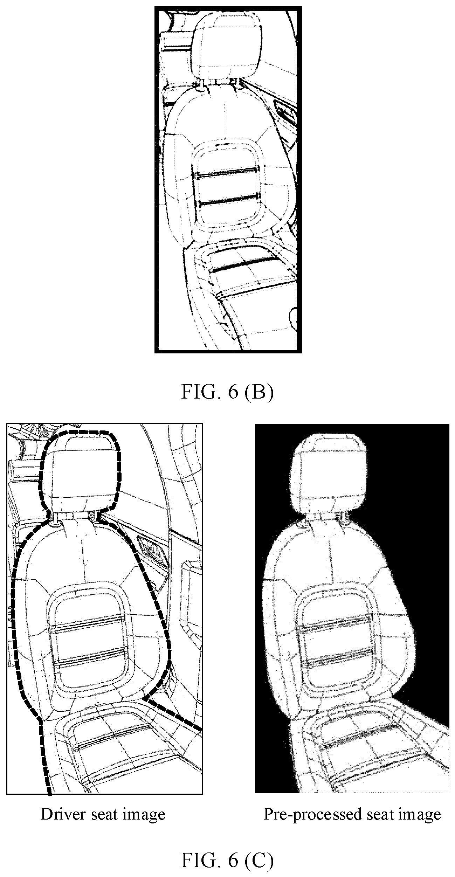

Refer to FIG. 6 (A) and FIG. 6 (B). The driver seat image capture apparatus uses a customized ordinary lens or a wide-angle lens. An image captured by the customized ordinary lens or the wide-angle lens needs to cover an entire front row image of a driver's cab. A left seat image, a right seat image, and a steering wheel image can be captured. The apparatus is fastened to a rear view mirror. A fixed position needs to meet the following requirements:
(1) the position is through a central vertical line of a mirror surface of a rear view mirror;
(2) the lens faces toward a driver's head area;
(3) a steering wheel of a vehicle is included in the lens;
(4) contours of a front-row seat and a steering wheel are detected based on a computer vision target detection algorithm (as shown in the bold box in the figure);
(5) a seat on a same side as the steering wheel is determined as a driver seat; and
(6) an original image is cropped based on a contour frame of the seat on the same side as the steering wheel to obtain the driver seat image.

Refer to FIG. 6 (C). After the driver seat image is obtained, a background is removed from the driver seat image based on contour estimation to obtain a seat image. Facial detection is performed after the seat image is obtained.

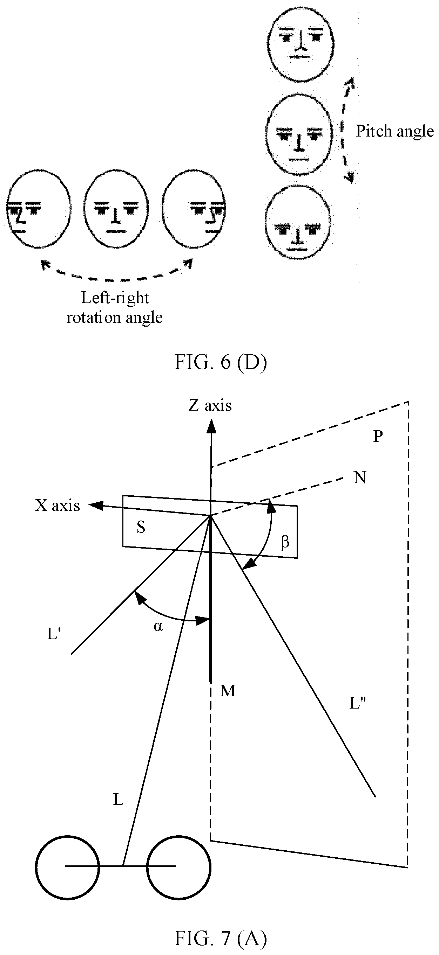

Refer to FIG. 6 (D), after a facial image is obtained, the rear view mirror system determines whether a target object faces toward a central rear view mirror based on a pitch angle and a left-right rotation angle of the facial image relative to a face facing straight ahead.

Based on the method for controlling a rear view mirror in the embodiment shown in FIG. 3 (A), FIG. 3 (B), and FIG. 4, the following provides an application scenario in embodiments of this application.

Refer to FIG. 7 (A). Embodiments of this application provide a calculation and adjustment method for a deviation angle between a rear view mirror orientation and a driver's angle of view.

On the rear view mirror, a left direction along an upper edge of the rear view mirror is determined as a positive direction of an X axis and an upward direction of a central vertical line M of the rear view mirror is determined as a positive direction of a Z axis, and a normal plane P perpendicular to the mirror surface of the rear view mirror and a normal line N of the mirror surface are determined.

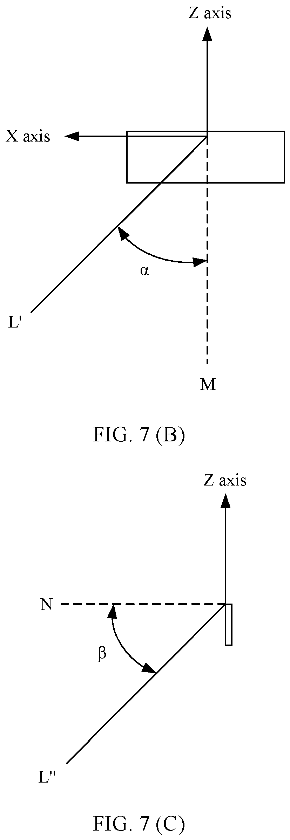

A connection line L between a midpoint of a connection line connecting human eye position points corresponding to a left eyeball and a right eyeball and an origin of the rear view mirror is determined. A projection L' of the straight line L on the mirror surface of the rear view mirror is determined, and a projection L" of the straight line L on the normal plane perpendicular to the mirror surface of the rear view mirror is determined. An included angle between L' and the central vertical line M of the mirror surface of the rear view mirror is an angle α, and an included angle between L" and the normal line N of the mirror surface is an angle β. Refer to FIG. 7 (B) and FIG. 7 (C). The rear view mirror is adjusted to angle α=0 and angle β=0, that is, the rear view mirror faces straight toward a face, so that a driver can clearly view content displayed on the rear view mirror.

The following describes a rear view mirror system in embodiments of this application.

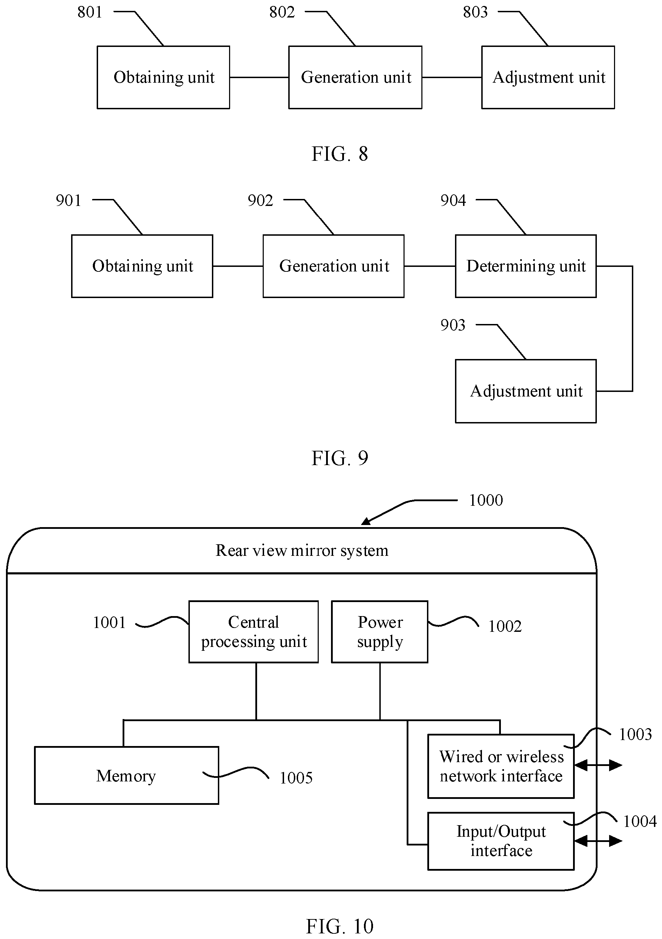

Refer to FIG. 8. In this embodiment of this application, the rear view mirror system includes an obtaining unit 801, a generation unit 802, and an adjustment unit 803.

The obtaining unit 801 is configured to obtain facial characteristic information of a target object.

The generation unit 802 is configured to generate a control instruction for a central rear view mirror if the facial characteristic information meets an instruction trigger condition.

The adjustment unit 803 is configured to adjust the central rear view mirror based on relative positions of the central rear view mirror and the target object in response to the control instruction.

Refer to FIG. 9, in another structure of a rear view mirror system according to an embodiment of this application, the rear view mirror system includes an obtaining unit 901, a generation unit 902, an adjustment unit 903, and a determining unit 904.

The obtaining unit 901 is specifically configured to obtain an effective facial posture corresponding to a target object when the target object faces toward a central rear view mirror.

The determining unit 904 is specifically configured to determine that facial characteristic information meets an instruction trigger condition when duration for which the effective facial posture is kept is greater than or equal to a duration threshold.

The obtaining unit 901 is specifically configured to obtain a facial image sequence of the target object.

The obtaining unit 901 is further configured to obtain the effective facial posture corresponding to the target object when it is detected that a facial posture of each facial image in the facial image sequence faces toward the central rear view mirror.

The determining unit 904 is specifically configured to determine that the facial posture faces toward the central rear view mirror when a left-right rotation angle and a pitch angle of the facial posture are smaller than an angle threshold.

The obtaining unit 901 is specifically configured to obtain a driver seat image sequence of the target object, and there is a correspondence between the driver seat image sequence and the facial image sequence.

The obtaining unit 901 is further configured to obtain the facial image sequence based on the driver seat image sequence.

The obtaining unit 901 is specifically configured to obtain a seat image sequence based on the driver seat image sequence, and there is a correspondence between the seat image sequence and the facial image sequence.

The obtaining unit 901 is further configured to obtain the facial image sequence based on the seat image sequence.

The obtaining unit 901 is specifically configured to obtain a front row image of a driver's cab.

The obtaining unit 901 is further configured to obtain a left seat image, a right seat image, and a steering wheel image based on the front row image of the driver's cab.

The determining unit 904 is further configured to determine a driver seat based on the left seat image, the right seat image, and the steering wheel image.

The obtaining unit 901 is further configured to obtain the driver seat image sequence based on the driver seat.

The determining unit 904 is specifically configured to determine a human eye position point based on the effective facial posture.

The determining unit 904 is further configured to determine a target connection line based on the human eye position point and a target position point on the central rear view mirror.

The obtaining unit 901 is specifically configured to obtain a first projection of the target connection line on a normal plane perpendicular to a mirror surface of the central rear view mirror.

The obtaining unit 901 is further configured to obtain a second projection of the target connection line on the mirror surface of the central rear view mirror.

The determining unit 904 is further configured to determine a first included angle between the first projection and a central vertical line of the mirror surface of the central rear view mirror.

The determining unit 904 is further configured to determine a second included angle between the second projection and a normal line of the mirror surface of the central rear view mirror.

The adjustment unit 903 is specifically configured to adjust the first included angle of the central rear view mirror to a first preset value.

The adjustment unit 903 is further configured to adjust the second included angle of the central rear view mirror to a second preset value.

FIG. 10 is a schematic diagram depicting a structure of a rear view mirror system according to an embodiment of this application. The rear view mirror system 1000 may include one or more central processing units (central processing units, CPU) 1001 and a memory 1005. The memory 1005 is configured to store one or more application programs or data.

The memory 1005 may be a volatile memory or a persistent memory. The program stored in the memory 1005 may include one or more modules, and each module may include a series of instruction operations for a server. Further, the central processing unit 1001 may be set to communicate with the memory 1005, and executes, on the rear view mirror system, the series of instruction operations in the memory 1005.

The rear view mirror system may further include one or more power supplies 1002, one or more wired or wireless network interfaces 1003, one or more input/output interfaces 1004, and/or one or more operating systems, for example, Windows ServerTM, Mac OS XTM, UnixTM, LinuxTM, or FreeBSDTM.

The central processing unit 1001 may perform the operations performed by the rear view mirror system in the embodiments shown in FIG. 3 (A) to FIG. 7 (C). Details are not described herein again.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be indirect couplings or communication connections through some interfaces, apparatuses or units, and may be in electrical, mechanical, or other forms.

The units described as separate parts may or may not be physically separate. Components displayed as units may or may not be physical units, that is, they may be located in one position, or may be distributed on a plurality of network units. Some or all of the units may be selected based on actual requirements to achieve objectives of solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be embodied in the form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A method for controlling a rear view mirror, wherein the method comprises:
obtaining facial characteristic information of a target object;
if the facial characteristic information meets an instruction trigger condition, generating a control instruction for a central rear view mirror; and
in response to the control instruction, adjusting the central rear view mirror based on relative positions of the central rear view mirror and the target object,
wherein the obtaining facial characteristic information of a target object comprises:
if the target object faces toward the central rear view mirror, obtaining an effective facial posture corresponding to the target object, wherein a facial posture is identified as the effective facial posture when a left-right rotation angle and a pitch angle of the facial posture are smaller than an angle threshold; and
after the obtaining facial characteristic information of a target object, the method further comprises:
if duration for which the effective facial posture is kept is greater than or equal to a duration threshold, determining that the facial characteristic information meets the instruction trigger condition.

2. The method for controlling a rear view mirror according to claim 1, wherein if the target object faces toward the central rear view mirror, the obtaining an effective facial posture corresponding to the target object comprises:
obtaining a facial image sequence of the target object; and
if it is detected that a facial posture of each facial image in the facial image sequence faces toward the central rear view mirror, obtaining the effective facial posture corresponding to the target object.

3. The method for controlling a rear view mirror according to claim 2, wherein after the obtaining a facial image sequence of the target object, the method further comprises:
if the left-right rotation angle and the pitch angle of the facial posture are smaller than the angle threshold, determining that the facial posture faces toward the central rear view mirror.

4. The method for controlling a rear view mirror according to claim 2, wherein the obtaining a facial image sequence of the target object comprises:
obtaining a driver seat image sequence of the target object, wherein there is a correspondence between the driver seat image sequence and the facial image sequence; and
obtaining the facial image sequence based on the driver seat image sequence.

5. A rear view mirror system, wherein the rear view mirror system comprises:
an obtaining unit (801, 901), configured to obtain facial characteristic information of a target object;
a generation unit (802, 902), configured to generate a control instruction for a central rear view mirror when the facial characteristic information meets an instruction trigger condition; and
an adjustment unit (803, 903), configured to adjust the central rear view mirror based on relative positions of the central rear view mirror and the target object in response to the control instruction,
wherein the rear view mirror system comprises:
the obtaining unit (901), specifically configured to obtain an effective facial posture corresponding to the target object when the target object faces toward the central rear view mirror, wherein a facial posture is identified as the effective facial posture when a left-right rotation angle and a pitch angle of the facial posture are smaller than an angle threshold; and
a determining unit (904), specifically configured to determine that the facial characteristic information meets the instruction trigger condition when duration for which the effective facial posture is kept is greater than or equal to a duration threshold.

6. The rear view mirror system according to claim 5, wherein the rear view mirror system comprises:
the obtaining unit (901), specifically configured to obtain a facial image sequence of the target object; and
the obtaining unit (901), further configured to obtain the effective facial posture corresponding to the target object when it is detected that a facial posture of each facial image in the facial image sequence faces toward the central rear view mirror.

7. The rear view mirror system according to claim 6, wherein the rear view mirror system comprises:
the determining unit (904), specifically configured to determine that the facial posture faces toward the central rear view mirror when the left-right rotation angle and the pitch angle of the facial posture are smaller than an angle threshold.

8. The rear view mirror system according to claim 6, wherein the rear view mirror system comprises:
the obtaining unit (901), specifically configured to obtain a driver seat image sequence of the target object, wherein there is a correspondence between the driver seat image sequence and the facial image sequence; and
the obtaining unit (901), further configured to obtain the facial image sequence based on the driver seat image sequence.

9. The rear view mirror system according to claim 8, wherein the rear view mirror system comprises:
the obtaining unit (901), specifically configured to obtain a seat image sequence based on the driver seat image sequence, wherein there is a correspondence between the seat image sequence and the facial image sequence; and
the obtaining unit (901), further configured to obtain the facial image sequence based on the seat image sequence.

10. A computer readable storage medium, wherein the computer readable storage medium stores a program, and when the program is executed by a computer, the method according to any one of claims 1 to 4 is implemented.

11. A computer program product, wherein when the computer program product is executed on a computer, the computer performs the method according to any one of claims 1 to 4.

12. A vehicle, wherein the vehicle comprises the rear view mirror system according to any one of claims 5 to 9.

## Patentansprüche

1. Verfahren zum Steuern eines Rückspiegels, wobei das Verfahren Folgendes umfasst:
Erhalten von Gesichtsmerkmalsinformationen eines Zielobjekts;
falls die Gesichtsmerkmalsinformationen eine Anweisungsauslösebedingung erfüllen, Erzeugen einer Steuerungsanweisung für einen zentralen Rückspiegel; und
Einstellen des zentralen Rückspiegels als Reaktion auf die Steuerungsanweisung basierend auf den relativen Positionen des zentralen Rückspiegels und des Zielobjekts,
wobei das Erhalten von Gesichtsmerkmalsinformationen eines Zielobjekts Folgendes umfasst:
falls das Zielobjekt dem zentralen Rückspiegel zugewandt ist, Erhalten einer effektiven Gesichtshaltung, die dem Zielobjekt entspricht, wobei eine Gesichtshaltung als die effektive Gesichtshaltung identifiziert wird, wenn ein Links-Rechts-Drehwinkel und ein Neigungswinkel der Gesichtshaltung kleiner als ein Winkelschwellenwert sind; und
das Verfahren nach dem Erhalten von Gesichtsmerkmalsinformationen eines Zielobjekts ferner Folgendes umfasst:
falls eine Dauer, für die die effektive Gesichtshaltung beibehalten wird, größer oder gleich einem Dauerschwellenwert ist, Bestimmen, dass die Gesichtsmerkmalsinformationen die Anweisungsauslösebedingung erfüllen.

2. Verfahren zum Steuern eines Rückspiegels nach Anspruch 1, wobei, falls das Zielobjekt dem zentralen Rückspiegel zugewandt ist, das Erhalten einer effektiven Gesichtshaltung, die dem Zielobjekt entspricht, Folgendes umfasst:
Erhalten einer Gesichtsbildsequenz des Zielobjekts; und
falls erkannt wird, dass eine Gesichtshaltung jedes Gesichtsbildes in der Gesichtsbildsequenz dem zentralen Rückspiegel zugewandt ist, Erhalten der effektiven Gesichtshaltung, die dem Zielobjekt entspricht.

3. Verfahren zum Steuern eines Rückspiegels nach Anspruch 2, wobei das Verfahren nach dem Erhalten einer Gesichtsbildsequenz des Zielobjekts ferner Folgendes umfasst:
falls der Links-Rechts-Drehwinkel und der Neigungswinkel der Gesichtshaltung kleiner als der Winkelschwellenwert sind, Bestimmen, dass die Gesichtshaltung dem zentralen Rückspiegel zugewandt ist.

4. Verfahren zum Steuern eines Rückspiegels nach Anspruch 2, wobei das Erhalten einer Gesichtsbildsequenz des Zielobjekts Folgendes umfasst:
Erhalten einer Fahrersitzbildsequenz des Zielobjekts, wobei es eine Entsprechung zwischen der Fahrersitzbildsequenz und der Gesichtsbildsequenz gibt; und
Erhalten der Gesichtsbildsequenz basierend auf der Fahrersitzbildsequenz.

5. Rückspiegelsystem, wobei das Rückspiegelsystem Folgendes umfasst:
eine Erhaltungseinheit (801, 901), die dazu konfiguriert ist, Gesichtsmerkmalsinformationen eines Zielobjekts zu erhalten;
eine Erzeugungseinheit (802, 902), die dazu konfiguriert ist, eine Steuerungsanweisung für einen zentralen Rückspiegel zu erzeugen, wenn die Gesichtsmerkmalsinformationen eine Anweisungsauslösebedingung erfüllen; und
eine Einstellungseinheit (803, 903), die dazu konfiguriert ist, den zentralen Rückspiegel basierend auf relativen Positionen des zentralen Rückspiegels und des Zielobjekts als Reaktion auf die Steuerungsanweisung einzustellen,
wobei das Rückspiegelsystem Folgendes umfasst:
die Erhaltungseinheit (901), die speziell dazu konfiguriert ist, eine effektive Gesichtshaltung zu erhalten, die dem Zielobjekt entspricht, wenn das Zielobjekt dem zentralen Rückspiegel zugewandt ist, wobei eine Gesichtshaltung als die effektive Gesichtshaltung identifiziert wird, wenn ein Links-Rechts-Drehwinkel und ein Neigungswinkel der Gesichtshaltung kleiner als ein Winkelschwellenwert sind; und
eine Bestimmungseinheit (904), die speziell dazu konfiguriert ist, zu bestimmen, dass die Gesichtsmerkmalsinformationen die Anweisungsauslösebedingung erfüllen, wenn eine Dauer, für die die effektive Gesichtshaltung beibehalten wird, größer oder gleich einem Dauerschwellenwert ist.

6. Rückspiegelsystem nach Anspruch 5, wobei das Rückspiegelsystem Folgendes umfasst:
die Erhaltungseinheit (901), die speziell dazu konfiguriert ist, eine Gesichtsbildsequenz des Zielobjekts zu erhalten; und
die Erhaltungseinheit (901), die ferner dazu konfiguriert ist, die effektive Gesichtshaltung, die dem Zielobjekt entspricht, zu erhalten, wenn erkannt wird, dass eine Gesichtshaltung jedes Gesichtsbildes in der Gesichtsbildsequenz dem zentralen Rückspiegel zugewandt ist.

7. Rückspiegelsystem nach Anspruch 6, wobei das Rückspiegelsystem Folgendes umfasst:
die Bestimmungseinheit (904), die speziell dazu konfiguriert ist, zu bestimmen, dass die Gesichtshaltung dem zentralen Rückspiegel zugewandt ist, wenn der Links-Rechts-Drehwinkel und der Neigungswinkel der Gesichtshaltung kleiner als ein Winkelschwellenwert sind.

8. Rückspiegelsystem nach Anspruch 6, wobei das Rückspiegelsystem Folgendes umfasst:
die Erhaltungseinheit (901), die speziell dazu konfiguriert ist, eine Fahrersitzbildsequenz des Zielobjekts zu erhalten, wobei es eine Entsprechung zwischen der Fahrersitzbildsequenz und der Gesichtsbildsequenz gibt; und
die Erhaltungseinheit (901), die ferner dazu konfiguriert ist, die Gesichtsbildsequenz basierend auf der Fahrersitzbildsequenz zu erhalten.

9. Rückspiegelsystem nach Anspruch 8, wobei das Rückspiegelsystem Folgendes umfasst:
die Erhaltungseinheit (901), die speziell dazu konfiguriert ist, eine Sitzbildsequenz basierend auf der Fahrersitzbildsequenz zu erhalten, wobei es eine Entsprechung zwischen der Sitzbildsequenz und der Gesichtsbildsequenz gibt; und
die Erhaltungseinheit (901), die ferner dazu konfiguriert ist, die Gesichtsbildsequenz basierend auf der Sitzbildsequenz zu erhalten.

10. Computerlesbares Speichermedium, wobei das computerlesbare Speichermedium ein Programm speichert und, wenn das Programm durch einen Computer ausgeführt wird, das Verfahren nach einem der Ansprüche 1 bis 4 implementiert wird.

11. Computerprogrammprodukt, wobei der Computer, wenn das Computerprogrammprodukt auf einem Computer ausgeführt wird, das Verfahren nach einem der Ansprüche 1 bis 4 durchführt.

12. Fahrzeug, wobei das Fahrzeug das Rückspiegelsystem nach einem der Ansprüche 5 bis 9 umfasst.

## Revendications

1. Procédé de commande d'un rétroviseur, dans lequel le procédé comprend :
l'obtention d'informations de caractéristiques faciales d'un objet cible ;
si les informations de caractéristiques faciales répondent à une condition de déclenchement d'instruction, la génération d'une instruction de commande pour un rétroviseur central ; et
en réponse à l'instruction de commande, l'ajustement du rétroviseur central en fonction de positions relatives du rétroviseur central et de l'objet cible,
dans lequel l'obtention d'informations de caractéristiques faciales d'un objet cible comprend :
si l'objet cible fait face vers le rétroviseur central, l'obtention d'une posture faciale effective correspondant à l'objet cible, dans lequel une posture faciale est identifiée comme posture faciale effective lorsqu'un angle de rotation gauche-droite et un angle d'inclinaison de la posture faciale sont inférieurs à un seuil angulaire ; et
après l'obtention des informations de caractéristiques faciales d'un objet cible, le procédé comprend en outre :
si la durée pendant laquelle la posture faciale effective est maintenue est supérieure ou égale à un seuil de durée, la détermination que les informations de caractéristiques faciales répondent à la condition de déclenchement d'instruction.

2. Procédé de commande d'un rétroviseur selon la revendication 1, dans lequel, si l'objet cible fait face vers le rétroviseur central, l'obtention d'une posture faciale effective correspondant à l'objet cible comprend :
l'obtention d'une séquence d'images faciales de l'objet cible ; et
s'il est détecté qu'une posture faciale de chaque image faciale de la séquence d'images faciales fait face vers le rétroviseur central, l'obtention de la posture faciale effective correspondant à l'objet cible.

3. Procédé de commande d'un rétroviseur selon la revendication 2, dans lequel, après l'obtention d'une séquence d'images faciales de l'objet cible, le procédé comprend en outre :
si l'angle de rotation gauche-droite et l'angle d'inclinaison de la posture faciale sont inférieurs au seuil angulaire, la détermination que la posture faciale fait face vers le rétroviseur central.

4. Procédé de commande d'un rétroviseur selon la revendication 2, dans lequel l'obtention d'une séquence d'images faciales de l'objet cible comprend :
l'obtention d'une séquence d'images de siège conducteur de l'objet cible, dans lequel il existe une correspondance entre la séquence d'images de siège conducteur et la séquence d'images faciales ; et
l'obtention de la séquence d'images faciales en fonction de la séquence d'images de siège conducteur.

5. Système de rétroviseur, dans lequel système de rétroviseur comprend :
une unité d'acquisition (801, 901), configurée pour obtenir des informations de caractéristiques faciales d'un objet cible ;
une unité de génération (802, 902), configurée pour générer une instruction de commande pour un rétroviseur central lorsque les informations de caractéristiques faciales répondent à une condition de déclenchement d'instruction ; et
une unité d'ajustement (803, 903), configurée pour ajuster le rétroviseur central en fonction de positions relatives du rétroviseur central et de l'objet cible en réponse à l'instruction de commande,
dans lequel le système de rétroviseur comprend :
l'unité d'obtention (901), spécifiquement configurée pour obtenir une posture faciale effective correspondant à l'objet cible lorsque l'objet cible fait face vers le rétroviseur central, dans lequel une posture faciale est identifiée comme la posture faciale effective lorsqu'un angle de rotation gauche-droite et un angle d'inclinaison de la posture faciale sont inférieurs à un seuil angulaire ; et
une unité de détermination (904), spécifiquement configurée pour déterminer que les informations de caractéristiques faciales répondent à la condition de déclenchement d'instruction lorsque la durée pendant laquelle la posture faciale effective est maintenue est supérieure ou égale à un seuil de durée.

6. Système de rétroviseur selon la revendication 5, dans lequel le système de rétroviseur comprend :
l'unité d'obtention (901), spécifiquement configurée pour obtenir une séquence d'images faciales de l'objet cible ; et
l'unité d'obtention (901), configurée en outre pour obtenir la posture faciale effective correspondant à l'objet cible lorsqu'il est détecté qu'une posture faciale de chaque image faciale dans la séquence d'images faciales fait face vers le rétroviseur central.

7. Système de rétroviseur selon la revendication 6, dans lequel le système de rétroviseur comprend :
l'unité de détermination (904), spécifiquement configurée pour déterminer que la posture faciale fait face vers le rétroviseur central lorsque l'angle de rotation gauche-droite et l'angle d'inclinaison de la posture faciale sont inférieurs à un seuil angulaire.

8. Système de rétroviseur selon la revendication 6, dans lequel le système de rétroviseur comprend :
l'unité d'obtention (901), spécifiquement configurée pour obtenir une séquence d'images de siège conducteur de l'objet cible, dans lequel il existe une correspondance entre la séquence d'images de siège conducteur et la séquence d'images faciales ; et
l'unité d'obtention (901), configurée en outre pour obtenir la séquence d'images faciales en fonction de la séquence d'images de siège conducteur.

9. Système de rétroviseur selon la revendication 8, dans lequel le système de rétroviseur comprend :
l'unité d'obtention (901), spécifiquement configurée pour obtenir une séquence d'images de siège en fonction de la séquence d'images de siège conducteur, dans lequel il existe une correspondance entre la séquence d'images de siège et la séquence d'images faciales ; et
l'unité d'obtention (901), configurée en outre pour obtenir la séquence d'images faciales en fonction de la séquence d'images de siège.

10. Support de stockage lisible par ordinateur, dans lequel le support de stockage lisible par ordinateur stocke un programme, et lorsque le programme est exécuté par un ordinateur, le procédé selon l'une quelconque des revendications 1 à 4 est mis en œuvre.

11. Produit programme d'ordinateur, dans lequel lorsque le produit programme d'ordinateur est exécuté sur un ordinateur, l'ordinateur réalise le procédé selon l'une quelconque des revendications 1 à 4.

12. Véhicule, dans lequel le véhicule comprend le système de rétroviseur selon l'une quelconque des revendications 5 à 9.
